# FASCICULE DE BREVET EUROPEEN

(11) **EP 3 301 605 B1**
(45) Date de publication et mention de la délivrance du brevet: **31.03.2021**
(21) Numéro de dépôt: 17156779.5
(22) Date de dépôt: 17.02.2017
(51) Int. Cl.: G06F 21/75, G06F 21/77, G06F 21/87, H01L 21/8238, H01L 27/092, H01L 29/10, H03K 5/24, H01L 29/66, H01L 23/00

(54) **PUCE ÉLECTRONIQUE PROTÉGÉE**
GESCHÜTZTER ELEKTRONISCHER CHIP
PROTECTED ELECTRONIC CHIP

(30) Priorité: 30.09.2016 FR 1659451
(43) Date de publication de la demande: 04.04.2018
(73) Titulaire: STMICROELECTRONICS (ROUSSET) SAS, 13790 Rousset (FR)
(72) Inventeur: CHAMPEIX, Clement, 42160 Saint-Cyprien (FR); BORREL, Nicolas, 13500 Martigues (FR); SARAFIANOS, Alexandre, 13530 Trets (FR)
(74) Mandataire: Cabinet Beaumont

(56) Documents cités:
- WO-A1-2004/047172
- FR-A1- 2 958 078
- US-A1- 2013 193 437
- US-A1- 2013 314 121
- HAGAI BAR-EL ET AL: "The Sorcerer's Apprentice Guide to Fault Attacks", INTERNET CITATION, 7 mai 2004 (2004-05-07), XP002329915, Extrait de l'Internet: URL:http://web.archive.org/web/20041016071 838/eprint.iacr.org/2004/100 [extrait le 2005-05-27]

## Description

### Domaine

La présente demande concerne les puces électroniques, en particulier des puces électroniques sécurisées contre des attaques.

### Exposé de l'art antérieur

Des puces électroniques telles que des puces de cartes bancaires contiennent des données confidentielles susceptibles d'être convoitées par des pirates. Pour obtenir ces informations, un pirate peut mener une attaque en balayant la face arrière de la puce par des impulsions laser. L'impact du laser perturbe le fonctionnement de la puce. C'est l'observation des conséquences de ces perturbations, parfois appelées fautes, sur l'activité du circuit, qui permet au pirate de mener à bien son attaque. Pour perturber le fonctionnement de la puce, le pirate peut aussi appliquer des potentiels positifs ou négatifs au moyen d'une sonde en contact avec la face arrière.

Il est souhaitable de disposer de puces électroniques protégées contre ce type d'attaque, dit attaque par injection de fautes, les dispositifs connus présentant divers inconvénients et difficultés de mise en oeuvre.

Les demandes de brevet US 2013/193437 et FR 2 958 078 décrivent des dispositifs de protection de puces électroniques contre des attaques.

### Résumé

La présente invention est définie par les revendications ci-jointes. Ainsi, un mode de réalisation prévoit une puce électronique, comprenant : un substrat semiconducteur dopé d'un premier type de conductivité ; une couche enterrée dopée d'un deuxième type de conductivité recouvrant le substrat ; un premier caisson dopé du premier type de conductivité recouvrant la couche enterrée ; des circuits séparés de la couche enterrée formés dans et sur le premier caisson et/ou dans et sur des deuxièmes caissons formés dans le premier caisson ; et un détecteur du courant de polarisation de la couche enterrée.

Selon un mode de réalisation, un premier mur du deuxième type de conductivité en contact avec la couche enterrée entoure le premier caisson.

Selon un mode de réalisation, un deuxième mur du premier type de conductivité en contact avec le substrat entoure le premier mur.

Selon un mode de réalisation, entre la couche enterrée et les deuxièmes caissons, le premier caisson a une épaisseur comprise entre 2 et 3 µm.

Selon un mode de réalisation, la couche enterrée a une épaisseur comprise entre 2 et 3 µm.

Selon un mode de réalisation, le détecteur est adapté à produire un signal d'alerte lorsque le courant de polarisation est, en valeur absolue, supérieur à une valeur comprise entre 2 et 50 µA.

Un mode de réalisation prévoit un procédé de protection de la puce ci-dessus contre une attaque, comprenant : polariser le substrat et le premier caisson à un potentiel de référence ; polariser la couche enterrée de façon à bloquer la jonction entre la couche enterrée et le substrat et la jonction entre la couche enterrée et le premier caisson ; et produire un signal d'alerte si le courant de polarisation de la couche enterrée est supérieur à un seuil, le signal d'alerte déclenchant des contre-mesures pour stopper l'attaque.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
les figures 1 et 2 sont des vues en coupe partielles et schématiques illustrant différents types de circuit d'une puce électronique ;
la figure 3A est une vue en coupe partielle et schématique d'un mode de réalisation d'une puce électronique protégée contre des attaques ;
la figure 3B est une vue de dessus schématique de la puce de la figure 3A ; et
la figure 4 illustre un mode de réalisation d'un détecteur d'attaque.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, des détails de circuits analogiques ou numériques et de circuits mémoire ne sont pas représentés.

Dans la description qui suit, lorsque l'on fait référence à des qualificatifs de position relative, tels que les termes "dessus", "dessous", "supérieur", "inférieur", etc., il est fait référence à l'orientation de l'élément concerné dans les vues en coupe concernées.

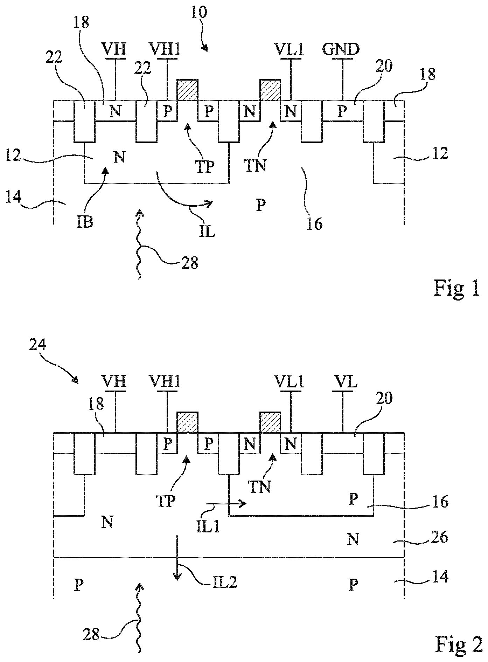

La figure 1 est une vue en coupe illustrant un exemple d'un circuit 10 d'un premier type, dit à double caisson (de l'anglais "double well"), compris dans une puce électronique. Le circuit 10 comprend des transistors MOS à canal P TP et des transistors MOS à canal N TN. Les transistors TP sont formés dans et sur des caissons 12 dopés de type N situés dans la face avant d'un substrat 14 dopé de type P. Les transistors TN sont formés dans et sur des parties 16 du substrat situées entre les caissons N 12. Les caissons N 12 sont munis de contacts de polarisation 18 en face avant. Les contacts 18 sont reliés à un noeud d'application d'un potentiel haut VH. Les parties 16 sont munies de contacts de polarisation 20 en face avant reliés à une masse GND. Les transistors TP et TN sont reliés, par des conducteurs non représentés, pour former des circuits alimentés entre des potentiels haut VH1 et bas VL1. Les potentiels d'alimentation VH1 et VL1 peuvent être respectivement égaux aux potentiels de polarisation VH et GND. Les transistors TN, TP et les contacts de polarisation 18 et 20 sont séparés les uns des autres par des tranchées d'isolement 22.

La figure 2 est une vue en coupe illustrant un exemple d'un circuit 24 d'un deuxième type, dit à triple caisson (de l'anglais "triple well") compris dans une puce électronique. Le circuit 24 reprend des éléments du circuit 10 qui ne seront pas décrits à nouveau. Dans le circuit 24, les caissons N 12 sont regroupés en un caisson profond 26 dans lequel sont formés des caissons P 16, et les contacts de polarisation 20 des caissons P 16 sont reliés à un noeud d'application d'un potentiel bas VL qui peut être différent de la masse GND.

Comme ceci a été indiqué en préambule, les circuits d'une puce peuvent contenir des informations confidentielles convoitées par un pirate. Le pirate est susceptible de chercher à obtenir ces informations par une attaque par injection de fautes. Pour cela, le pirate peut d'abord observer différents circuits de la puce à partir de la face arrière par caméra infrarouge, puis sélectionner un circuit à attaquer.

Le pirate peut attaquer le circuit par une impulsion laser 28. Dans le cas d'un circuit de type à double caisson tel qu'illustré en figure 1, l'impulsion crée des paires électron-trou à proximité de la jonction PN entre un caisson N 12 et le substrat P 14. Les électrons sont séparés par le champ électrique existant à proximité de la jonction PN. Les électrons se dirigent vers les potentiels hauts du caisson N 12 et les trous se dirigent vers les potentiels bas d'une partie P 16 voisine. Il en résulte un courant IL qui s'écoule depuis le caisson N 12 vers la partie P 16. La présence d'électrons et de trous, respectivement dans le caisson 12 et dans la partie 16, perturbe le fonctionnement des transistors TN et TP. Dans le cas d'un circuit de type à triple caisson, l'impulsion laser crée un photocourant IL1 depuis le caisson N 26 vers le caisson P 16 et un photocourant IL2 depuis le caisson N 26 vers le substrat P 14, ce qui perturbe le fonctionnement des transistors.

Le pirate peut aussi attaquer le circuit en appliquant un potentiel, par exemple un potentiel positif de plusieurs dizaines de volts, au moyen d'une sonde non représentée appliquée sur la face arrière. Dans l'exemple d'un circuit de type à triple caisson, la jonction PN entre le substrat P 14 et le caisson N 26 se trouve polarisée en direct. Un transistor bipolaire constitué d'un caisson P 16, du caisson N 26 et du substrat P 14 a sa jonction base-émetteur polarisée en direct et est donc passant. De cette manière, le pirate injecte des charges dans les caissons N 26 et P 16, ce qui perturbe le fonctionnement des transistors TN et TP.

On cherche ici à protéger contre de telles attaques des circuits du type à double caisson ou du type à triple caisson, ces circuits pouvant être des circuits numériques ou des circuits analogiques. On cherche également à protéger d'autres types de circuits, par exemple des circuits comprenant des transistors bipolaires et/ou d'autres types de composants semiconducteurs et/ou des composants tels que des capacités ou des résistances. On cherche de plus à protéger des circuits mémoire, c'est-à-dire des circuits comprenant un ensemble de points mémoire, par exemple une matrice de points mémoire.

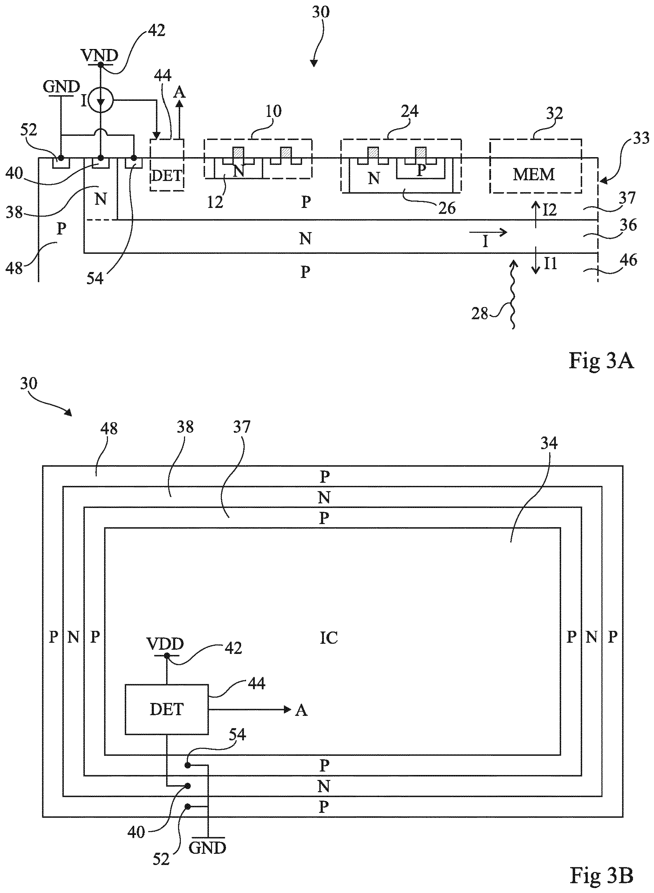

Les figures 3A et 3B illustrent un mode de réalisation d'une puce 30 protégée contre des attaques par injection de fautes. La figure 3A est une vue en coupe partielle et schématique, et la figure 3B est une vue de dessus à une échelle différente.

A titre d'exemple, la puce 30 comprend un circuit 10 du type de celui de la figure 1, un circuit 24 du type de celui de la figure 2 et un circuit mémoire 32 (MEM) formés en face avant d'une plaquette semiconductrice 33. Les circuits 10, 24 et 32 illustrés en figure 3A sont situés dans une zone protégée 34 (IC) visible en figure 3B où ces circuits ne sont pas représentés.

La puce 30 comprend une couche enterrée 36 dopée de type N située sous une couche 37 dopée de type P. Les circuits 10, 24 et 32 sont formés dans et sur la couche 37. La couche P 37 est en contact avec la couche enterrée 36, par contre les éléments des circuits 10, 24 et 32 ne s'étendent pas jusqu'à la couche enterrée 36.

La périphérie de la couche enterrée de type N 36 est en contact avec un mur 38 dopé de type N qui s'étend, à partir de la face avant, dans la partie de la plaquette 33 située autour de la zone protégée 34. La couche 37, ainsi délimitée par la couche enterrée 36 et par le mur 38, constitue un caisson 37. A titre d'exemple, le mur 38 entoure complètement la zone protégée 34. Le mur 38 est surmonté d'un contact 40 relié à un noeud 42 d'application d'un potentiel haut de polarisation VDD. Le contact 40 est relié à un détecteur 44 (DET) du courant de polarisation I de la couche enterrée 36, c'est-à-dire du courant absorbé par la couche enterrée 36 ou issu de celle-ci. Le détecteur peut être situé dans la zone protégée 34.

La partie de la plaquette 33 située sous la couche enterrée 36 correspond à un substrat 46 dopé de type P. Le substrat 46 est en contact avec un mur périphérique 48 dopé de type P qui s'étend jusqu'à la face avant.

Le mur P 48 est connecté à la masse GND par un contact 52 et le caisson P 37 est connecté à la masse GND par un contact 54.

A titre d'exemple, les caissons N 12 et 26 des circuits 10 et 24 peuvent pénétrer dans le caisson P 37 jusqu'à une profondeur inférieure à 2 µm. L'épaisseur du caisson 37 entre le niveau inférieur des caissons N 12 et 26 et le niveau supérieur de la couche enterrée 36 peut être comprise entre 2 et 3 µm. La couche enterrée 36 peut avoir une épaisseur comprise entre 2 et 3 µm.

En fonctionnement normal, c'est-à-dire en l'absence d'attaque, les jonctions PN entre la couche enterrée 36 et les régions dopées de type P 46 et 37 environnantes sont polarisées en inverse, et le courant I de polarisation de la couche enterrée 36 est négligeable.

En cas d'attaque par un faisceau laser 28 depuis la face arrière, un courant photogénéré I1 s'écoule depuis la couche enterrée 36 vers le substrat P 46, et un courant photogénéré I2 s'écoule depuis la couche enterrée 36 vers le caisson P 37. Le courant de polarisation I de la couche enterrée 36, qui comprend les deux composantes I1 et I2, augmente donc du fait de l'attaque. Lorsque ce courant I devient supérieur à un seuil, le détecteur émet un signal d'alerte A. A la suite de la génération de ce signal d'alerte, des contre-mesures sont prises pour stopper l'attaque, par exemple en détruisant les données confidentielles ou en arrêtant le fonctionnement des circuits.

On détecte et on stoppe de manière similaire les attaques par application d'un potentiel positif ou négatif par une sonde sur la face arrière de la puce. A titre d'exemple, le seuil de courant détecté est en valeur absolue compris entre 2 et 50 µA, par exemple 10 µA.

Selon un avantage, du fait de la présence de la couche enterrée N 36, on peut protéger tout type de circuit formé en partie supérieure du caisson 37, et on peut protéger simultanément plusieurs circuits de types différents. Dans l'exemple représenté, un circuit du type à double caisson, un circuit du type à triple caisson et un circuit mémoire sont protégés. On peut ainsi protéger simultanément tous les circuits d'une puce.

Selon un autre avantage, le caisson P 37, le mur N 38 et le mur P 48 occupent en face avant autour de la zone protégée 34 une bande de largeur faible, par exemple inférieure à 4 µm. La surface de la puce dédiée à la protection est limitée à cette bande et à la surface d'un seul détecteur commun aux circuits, tandis que la zone protégée 34 peut être de surface supérieure à 1 mm². La surface de la puce utilisée pour protéger les circuits est de ce fait particulièrement limitée.

Selon un autre avantage, la sensibilité de détection est particulièrement élevée. En effet, du fait de la présence du caisson P 37, le courant de polarisation généré par l'attaque n'est pas mêlé aux courants d'alimentation des circuits ou aux courants de polarisation des caissons compris dans les circuits.

Selon un autre avantage, du fait de la présence de la couche enterrée de type N 36 prise en sandwich entre des régions P sous l'ensemble des circuits de la zone protégée 34, les caissons des circuits ne sont pas visibles par imagerie infrarouge. Ceci permet d'éviter que le pirate puisse choisir facilement les endroits à attaquer.

Selon un autre avantage, la présence du mur N 38 séparé des circuits entourant la zone protégée 34 permet de protéger efficacement les parties des circuits situées en périphérie de zone protégée.

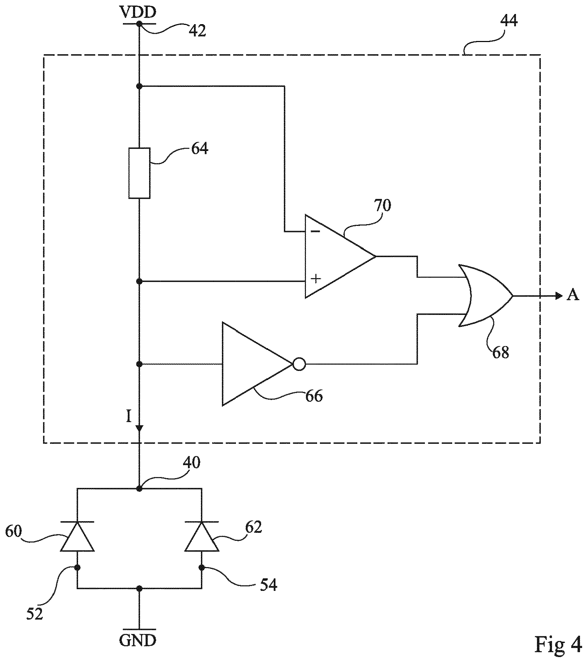

La figure 4 illustre un exemple de détecteur 44 adapté à détecter un courant entrant ou sortant de la couche enterrée 36. Le détecteur 44 est relié au noeud d'application du potentiel VDD et au contact 40 du mur 38 relié à la couche enterrée 36. On a représenté par une diode 60 la jonction PN entre le substrat 46 relié au contact 52, et par une diode 62 la jonction PN entre le caisson P 37 relié au contact 54 et la couche enterrée 36.

Le détecteur 44 comprend une résistance 64 reliant le contact 40 au noeud 42 d'application du potentiel VDD. Le contact 40 est couplé par un inverseur 66 à une première entrée d'une porte OU 68. Un comparateur 70 est connecté aux bornes de la résistance 64, l'entrée positive du comparateur 70 étant connectée au contact 40 et l'entrée négative étant à la tension VDD. La sortie du comparateur 70 est reliée à une deuxième entrée de la porte OU 68. Le signal d'alerte A correspond à une valeur haute de la sortie de la porte OU 68.

En fonctionnement normal, le contact 40 est porté au potentiel VDD au travers de la résistance 64. Aucun signal d'alerte n'est émis.

En cas d'attaque laser provoquant l'absorption par la couche enterrée d'un courant I, le potentiel du contact 40 chute et la sortie de l'inverseur 66 passe à la valeur haute, ce qui provoque l'émission du signal d'alerte A. On détecte de même une attaque par application d'un potentiel négatif élevé sur la face arrière.

En cas d'attaque par application d'un potentiel positif sur la face arrière, un courant provenant du noeud 40 provoque une augmentation du potentiel du contact 40, et ce potentiel devient supérieur au potentiel VDD. Lorsque le potentiel du contact 40 dépasse une valeur de seuil, la sortie du comparateur 70 passe à la valeur haute, ce qui provoque l'émission du signal d'alerte A.

Selon un avantage, le détecteur ainsi obtenu contient un nombre réduit de composants et est facile à mettre en oeuvre. Ce détecteur occupe une surface limitée sur la puce. De plus, ce détecteur permet une protection à la fois contre les attaques par laser et contre les attaques par application d'un potentiel.

Des modes de réalisation particuliers ont été décrits. Diverses variantes et modifications apparaîtront à l'homme de l'art. En particulier, bien que l'on ait décrit, en relation avec la figure 4, une résistance 64 permettant d'appliquer le potentiel de polarisation VDD sur le contact 40, la résistance 64 peut être remplacée par un circuit d'application du potentiel VDD, ce circuit fournissant un courant I_{TH} s'écoulant vers le contact 40 lorsque le potentiel du contact 40 est inférieur au potentiel VDD, et opposant une résistance au passage de courant depuis le contact 40 lorsque le potentiel du contact 40 est supérieur au potentiel VDD. La valeur du courant I_{TH} correspond alors à un seuil de détection du courant de polarisation.

En outre, bien que les murs 38 et 48 représentés en figure 3B entourent complètement la zone protégée 34, les murs 38 et 48 peuvent être remplacés par des murs similaires entourant partiellement la zone protégée. En outre, le mur 38 peut être remplacé par tout autre moyen de connecter électriquement la couche enterrée 36 au détecteur 44.

En outre, les types de conductivité N et P peuvent être inversés en inversant les signes des potentiels.

## Revendications

1. Puce électronique, comprenant :
un substrat semiconducteur (46) dopé d'un premier type de conductivité ;
une couche enterrée (36) dopée d'un deuxième type de conductivité recouvrant le substrat ;
un premier caisson (37) dopé du premier type de conductivité recouvrant la couche enterrée ;
des circuits (10, 24, 32) séparés de la couche enterrée formés dans et sur le premier caisson et/ou dans et sur des deuxièmes caissons (12, 26, 16) formés dans le premier caisson ; et
un détecteur du courant de polarisation (I) de la couche enterrée, adapté à produire un signal d'alerte (A) lorsque le courant de polarisation (I) est supérieur à un seuil, la couche enterrée (36) étant polarisée de façon à bloquer la jonction entre la couche enterrée et le premier caisson.

2. Puce selon la revendication 1, dans laquelle un premier mur (38) du deuxième type de conductivité en contact avec la couche enterrée (36) entoure le premier caisson (37).

3. Puce selon la revendication 2, dans laquelle un deuxième mur (48) du premier type de conductivité en contact avec le substrat (46) entoure le premier mur (38).

4. Puce selon l'une quelconque des revendications 1 à 3, dans laquelle, entre la couche enterrée et les deuxièmes caissons (12, 26), le premier caisson (37) a une épaisseur comprise entre 2 et 3 µm.

5. Puce selon l'une quelconque des revendications 1 à 4, dans laquelle la couche enterrée (36) a une épaisseur comprise entre 2 et 3 um.

6. Puce selon l'une quelconque des revendications 1 à 5, dans laquelle le détecteur (44) est adapté à produire un signal d'alerte (A) lorsque le courant de polarisation (I) est, en valeur absolue, supérieur à une valeur comprise entre 2 et 50 µA.

7. Procédé de protection d'une puce selon l'une quelconque des revendications 1 à 6 contre une attaque, comprenant :
polariser le substrat (46) et le premier caisson (37) à un potentiel de référence (GND) ;
polariser la couche enterrée (36) de façon à bloquer la jonction entre la couche enterrée et le substrat et la jonction entre la couche enterrée et le premier caisson ; et
produire un signal d'alerte (A) si le courant de polarisation (I) de la couche enterrée est supérieur à un seuil, le signal d'alerte déclenchant des contre-mesures pour stopper l'attaque.

## Patentansprüche

1. Ein elektronischer Chip, der Folgendes aufweist:
ein dotiertes Halbleitersubstrat (46) eines ersten Leitfähigkeitstyps
eine dotierte vergrabene Schicht (36) eines zweiten Leitfähigkeitstyps, die das Substrat bedeckt;
eine erste dotierte Wanne bzw. ein Topf (37) des ersten Leitfähigkeitstyps, die/der die vergrabene Schicht bedeckt;
Schaltkreise (10, 24, 32), die von der vergrabenen Schicht getrennt sind und die innerhalb und auf der Oberseite der ersten Wanne und/oder innerhalb und auf der Oberseite der in der ersten Wanne ausgebildeten zweiten Wannen (12, 26, 16) ausgebildet sind; und
einen Detektor für den Strom (I) zum Vorspannen der vergrabenen Schicht, der ausgelegt ist ein Alarmsignal (A) zu erzeugen, wenn der Vorspannungsstrom (I) größer als ein Schwellenwert ist, wobei die vergrabene Schicht (36) vorgespannt ist, um den Übergang zwischen der vergrabenen Schicht und der ersten Wanne zu blockieren.

2. Chip nach Anspruch 1, wobei eine erste Wand (38) des zweiten Leitfähigkeitstyps, die in Kontakt mit der vergrabenen Schicht (36) steht, die erste Wanne (37) umgibt.

3. Chip nach Anspruch 2, wobei eine zweite Wand (48) des ersten Leitfähigkeitstyps in Kontakt mit dem Substrat (46) die erste Wand (38) umgibt.

4. Chip nach einem der Ansprüche 1 bis 3, wobei die erste Wanne (37) zwischen der vergrabenen Schicht und den zweiten Wannen (12, 26) eine Dicke im Bereich von 2 bis 3 µm aufweist.

5. Chip nach einem der Ansprüche 1 bis 4, wobei die vergrabene Schicht (36) eine Dicke im Bereich von 2 bis 3 µm aufweist.

6. Chip nach einem der Ansprüche 1 bis 5, wobei der Detektor (44) ausgebildet ist ein Alarmsignal (A) zu erzeugen, wenn der Vorspannungsstrom (I) einen Absolutwert besitzt, der größer als ein Wert im Bereich von 2 bis 50 µA ist.

7. Verfahren zum Schutz des Chips nach einem der Ansprüche 1 bis 6 gegen einen Angriff, das Folgendes aufweist:
Vorspannen des Substrats (46) und der ersten Wanne (37) auf eine Referenzspannung (GND);
Vorspannen der vergrabenen Schicht (36), um den Übergang zwischen der vergrabenen Schicht und dem Substrat und den Übergang zwischen der vergrabenen Schicht und der ersten Wanne zu blockieren; und
Erzeugen eines Alarmsignals (A), wenn der Strom (I) zum Vorspannen der vergrabenen Schicht größer als ein Schwellenwert ist, wobei das Alarmsignal Gegenmaßnahmen auslöst, um den Angriff zu stoppen.

## Claims

1. An electronic chip, comprising:
a doped semiconductor substrate (46) of a first conductivity type;
a doped buried layer (36) of a second conductivity type covering the substrate;
a first doped well (37) of the first conductivity type covering the buried layer;
circuits (10, 24, 32) separated from the buried layer formed inside and on top of the first well and/or inside and on top of the second wells (12, 26, 16) formed in the first well; and
a detector of the current (I) for biasing the buried layer, adapted to generating an alert signal (A) when the bias current (I) is greater than a threshold, the buried layer (36) being biased in order to block the junction between the buried layer and the first well.

2. The chip of claim 1, wherein a first wall (38) of the second conductivity type in contact with the buried layer (36) surrounds the first well (37).

3. The chip of claim 2, wherein a second wall (48) of the first conductivity type in contact with the substrate (46) surrounds the first wall (38).

4. The chip of any of claims 1 to 3, wherein, between the buried layer and the second wells (12, 26), the first well (37) has a thickness in the range from 2 to 3 µm.

5. The chip of any of claims 1 to 4, wherein the buried layer (36) has a thickness in the range from 2 to 3 µm.

6. The chip of any of claims 1 to 5, wherein the detector (44) is adapted to generating an alert signal (A) when the bias current (I) is, in absolute value, greater than a value in the range from 2 to 50 µA.

7. A method of protecting the chip of any of claims 1 to 6 against an attack, comprising:
biasing the substrate (46) and the first well (37) to a reference potential (GND);
biasing the buried layer (36) to block the junction between the buried layer and the substrate and the junction between the buried layer and the first well; and
generating an alert signal (A) if the current (I) for biasing the buried layer is greater than a threshold, the alert signal triggering countermeasures to stop the attack.
